# EUROPEAN PATENT SPECIFICATION

(11) **EP 1 080 141 B1**
(45) Date of publication and mention of the grant of the patent: **21.08.2002**
(21) Application number: 99915211.9
(22) Date of filing: 01.04.1999
(51) Int. Cl.: C08J 9/08

(54) **EXPANDED ETHYLENE COPOLYMERS**
EXPANDIERTE ETHYLENCOPOLYMERE
COPOLYMERES D'ETHYLENE EXPANSE

(30) Priority: 08.04.1998 EP 98201071
(43) Date of publication of application: 07.03.2001
(73) Proprietor: E.I. DU PONT DE NEMOURS AND COMPANY, Wilmington Delaware 19898 (US)
(72) Inventor: HAUSMANN, Karlheinz, CH-2012 Auvernier (CH); PLACE, Henry, S., F-74140 Veigy-Foncenex (FR); WOLLAK, Herbert, Franz, CH-1228 Plan-les-Ouates (CH)
(74) Representative: Jones, Alan John
(86) International application number: US9907229
(87) International publication number: WO99051669

(56) References cited:
- EP-A- 0 514 172
- US-A- 3 264 272
- US-A- 4 307 204
- DATABASE WPI Section Ch, Week 8604 Derwent Publications Ltd., London, GB; Class A18, AN 86-025668 XP002111067 & JP 60 248748 A (UBE CYCON LTD), 9 December 1985 (1985-12-09)

## Description

### BACKGROUND OF THE INVENTION

The present invention relates to films and molded articles comprising ethylene copolymer compositions. More particularly, the ethylene copolymer compositions of the present invention contain compounds that react with the copolymer to liberate a gas which forms bubbles. These bubbles, which are dispersed in the end product films or molded articles, render certain desirable aesthetic characteristics to the end products.

Ethylene copolymer compositions used in the present invention - minus the gas liberating compounds - are well known in the packaging industry. Examples of such uses are as sealants or shrink film in mono- or multilayer films for food packaging or bottle bundling or as injection molded stoppers for perfume bottle caps.

It is also well known how to enhance the properties of these copolymers by using additives to color them or to achieve certain effects such as filling them with mineral fillers and to create a 'stone' like effect or similar.

Alkali metal carbonates are used to ionically crosslink ethylene copolymers or as water-soluble fillers. JP 60248748 A (abstract) teaches compositions employing alkali metal carbonates that foam substantially at elevated temperatures.

In the case of beverage and fragrance packaging it is sometimes important to create the impression of freshness and coolness in order to improve the market acceptance of a product. This can be best done by the creation of bubbles in the article that is used as a packaging material. A possibility is to add water directly to the copolymer composition or on a carrier, though this can lead to a very random distribution of bubbles and to rather large bubbles in the molded parts. Also it is very difficult to reproduce results as polymers are sometimes water sensitive.

The ethylene copolymer composition of the present invention overcomes the aforementioned problems, and yields films and molded articles having a reproducible, attractive dispersion of bubbles.

### SUMMARY OF THE INVENTION

The present invention relates to a molded article having a smooth exterior and an interior containing uniformly dispersed bubbles made from a first thermoplastic composition comprising a copolymer of ethylene and an α,β-unsaturated C₃-C₈ carboxylic acid and a compound which reacts with the acid group of the copolymer to liberate gas and a second thermoplastic composition not containing a compound which reacts to liberate gas co-injected over the first thermoplastic composition.

Furthermore, the present invention provides a multi-layer film made by co-extruding a first thermoplastic composition comprising a copolymer of ethylene and an α,β-unsaturated C₃-C₈ carboxylic acid and a compound which reacts with the acid group of the copolymer during the processing of the composition into the film to liberate gas to yield an attractive dispersion of bubbles in the film layer with a second thermoplastic composition not containing a compound which reacts to liberate gas during processing of the composition into the film.

### DETAILED DESCRIPTION OF THE INVENTION

The thermoplastic copolymers used in the present invention are known. They are copolymers of ethylene and an α,β-unsaturated C₃-C₈ carboxylic acid, and optionally contain at least one softening comonomer that is copolymerizable with ethylene. Acrylic and methacrylic acids are preferred acid comonomers. The softening comonomer can be an alkyl acrylate selected from the group consisting of n-propyl-, n-butyl, n-octyl, 2-ethylhexyl-, and 2-methoxyethyl-acrylates. The preferred alkyl acrylates are n-butyl-, 2-ethylhexyl-, and 2-methoxyethyl-acrylates. The softening comonomer can also be an alkyl vinyl ether selected from the group consisting of n-butyl, n-hexyl, 2-ethylhexyl-, and 2-methoxyethyl-vinyl ether. The preferred alkyl vinyl ethers are n-butyl vinyl ether and n-hexyl vinyl ether.

The copolymer can be from about 10 to 99.5% neutralized with metal ions selected from groups Ia, Ib, IIa, IIIa, IVa, VIb, and VIII of the Periodic Table of Elements such as sodium, potassium, zinc, calcium, magnesium, lithium, aluminum, nickel, and chrominum. Such neutralized ethylene acid copolymers are known in the art as 'ionomers'. Typically, neutralization will be from 10-70%. Preferably the copolymer has from about 35 to about 70% of the carboxylic acid groups ionized by neutralization with metal ions selected from the group consisting of sodium, potassium, zinc, calcium, and magnesium. Ionomers and their methods of manufacture are described in US Patent No. 3,264,272. Suitable ionomers for use in the present invention are commercially available under the trademark SURLYN; suitable ethylene acid copolymers are available under the trademark NUCREL; both from the DuPont Company. The copolymer will typically comprise from 95 to 99.95% by weight of the composition. If desired for certain applications, the composition can be, in turn, blended with other polyolefins prior to extrusion or molding. For example, blends of 8-100 weight % composition and 0-92 weight % polyolefins may produce satisfactory results whilst reducing overall costs.

The compound that reacts with the acid group of the copolymer is a metal carbonate with the metal ion chosen from the groups Ia, Ib, IIa of the periodic Table of Elements. A preferred such metal carbonate is sodium carbonate. The metal carbonate will typically comprise from 0.01 to 0.2% by weight of the composition.

In practice, the metal carbonate can be added to the composition in the form of a concentrated masterbatch of the metal carbonate and the copolymer. During the mixing of the masterbatch with the copolymer in order to form compositions suitable for extrusion or casting or molding, the metal carbonate reacts with the carboxylic acid functionality of the copolymer to liberate, in a controlled fashion, carbon dioxide gas. Bubble distribution it the resulting article can be controlled by the degree of homogeneous mixing of the metal carbonate into the copolymer. Bubble density and bubble diameter can be varied by varying the pressure of the system during formation of the bubbles. High pressure will result in few and fine bubbles. Low pressure will favor more and larger bubbles.

In addition, the melt flow index of the composition will also impact bubble size. A composition with a high melt flow index will provide a low resistance against bubble formation and therefore create large, coarse bubbles, whereas a composition with a low melt flow index will favor the creation of smaller bubbles.

In addition, compositions according to the present invention can contain additives, processing agents as known in the art to impart various desirable characteristics. These include: anti-blocking agents such as SiO₂, slip agents in the form of amides and colorants in amounts ranging from 0.1-2 weight % of the composition, or any other additives for performance enhancement of the film or molded article in the final application.

### Molding

Articles can be injection molded with aesthetically appealing centers having very fine bubbles of uniform diameter. In order to avoid surface defects in the articles, which are caused when bubbles come into contact with the mold surface and cause surface roughness (also known as 'splash'), a composition not containing a compound which reacts to liberate gas is co-injected over the composition of the present invention. This yields an article having a smooth exterior and an interior containing uniformly dispersed bubbles.

### Films

For the production of modified extruded film showing the same bubble effect it can be done by cast film or by blown film process, where the film is made by blowing a tube of the liquid polymer the composition of the present invention is co-extruded with a composition not containing a compound which reacts to liberate gas. This is necessary to assure a sufficient stability of the web and in particular to contain the over pressure within the tube during the blown film process.

The result is a surprisingly appealing looking film and a stable extrusion process due to the controlled gas release and stability brought to the structure by the unmodified co-extrusion layers. When extruded under specific conditions known in the art, e.g. as described in EP 0 537 080 B1, they show tear properties in transverse direction, which is desirable in various packaging applications. The resulting film provides for a packaging film giving its contents an appearance of 'freshness' and 'coolness' while still having maintained directional tear properties for easy opening performance.

### Examples

### Injection Molding

| Materials used: | |
|---|---|
| Surlyn PC100 | Ethylene methacrylic acid ionomer, MFI =0.9¹ at 190 °C/2.16 kg |
| Surlyn PC350 | Ethylene methacrylic acid ionomer, MFI = 3.5 at 190 °C/2.16 kg |
| Nucrel 1207 | Ethylene methacrylic acid copolymer, MFI = 7 at 190 °C/2.16 kg |
| Liquicolor | VL3576 Base liquid for liquid colors supplied by BASE saturated with water |
| Na₂CO₃ | Masterbatch of ethylene methacrylic acid copolymer (10 weight % methacrylic acid, MFI = 500 at 190 °C/2.16 kg) containing 60 wt %Na₂CO₃ |

| | |
|---|---|
| ¹All MFI given in g/10 min. | |

The examples described below are run on a Billion H1180/450 injection molding machine using Surlyn PC 100, Surlyn PC 350 and Nucrel 1207 as base polymers.

Two different types of foaming agent are used:
Liquicolor VL3619, containing water until its saturation;
From 0.1 to 1 weight % of Na₂CO₃ masterbatch (=0.06-0.6 wt % Na₂CO₃).

As can be seen from the data below it is possible to produce different levels of foaming by changing concentration of foaming agent and pressure. The melt temperature is 213 °C.

The Surlyn PC grades have a superior esthetic appearance because of higher clarity compared to the Nucrel. Amongst the Surlyn grades, PC100 seems to have the better surface appearance as the higher viscosity (lower MFI) prevents the bubbles from reaching the surface, thereby creating splash marks.

The liquid concentration samples on the other hand lead to very poor appearance and reproducibility and even dissolving Na₂CO₃ in the liquid carriers gives very poor foaming behavior.

| No | Control 1 | Control 2 | 1 | 2 | 3 | 4 | 5 |
|---|---|---|---|---|---|---|---|
| Surlyn PC100 | 100 | 100 | 100 | | | 100 | 100 |
| Liquicolor VL3576 | | 0.5 | | | | | |
| Surlyn PC350 | | | | 100 | | | |
| Nucrel 1207 | | | | | 100 | | |
| Na₂CO₃ masterbatch | 0 | 0 | 0.5 | 0.5 | 0.5 | 0.25 | 0.25 |
| Hold up pressure (MPa) | | | 100 | 100 | 100 | 100 | 7 |
| Remarks: | 1 | 2 | 3 | 4 | 5 | 6 | 7 |
| 1 no bubbles | | | | | | | |
| 2 large bubbles, poor distribution | | | | | | | |
| 3 fine bubbles | | | | | | | |
| 4 fine babbles, few splashes | | | | | | | |
| 5 fine bubbles, many splashes | | | | | | | |
| 6 fine bubbles, lower injection pressure | | | | | | | |
| 7 fine bubbles, large number of bubbles | | | | | | | |

It can be seen that Na₂CO₃ masterbatch gives a bubble concentration which is controllable by concentration of Na₂CO₃ as well as by the pressure and is also reproducible from one shot to the other due to fine uniform bubble size. Higher concentrations of the masterbatch increase viscosity and increase injection pressure and vice versa.

### Blown Film

| Materials used: | |
|---|---|
| Stamylan 3020H | LDPE, MFI 190°C/2.16 kg = 1.7-2.2 commercially available from DSM |
| Nucrel 0407 | Ethylene methacrylic acid copolymer, MFI = 7 at 190°C/2.16 kg, 4% methacrylic acid |
| Surlyn AD8455 | Ethylene methacrylic acid ionomer, MFI 190 = 3 at °C/2.16 kg, Zn Ionomer |
| MasteAatch | Contains 60 wt % Na₂CO₃ in ethylene methyacrylic acid (MFI = 500 at 190°C/2.16 kg, 10% methacrylic acid) |

For preparation of these films a Reifenhauser coextrusion line is used with a 3 layer Barmag die to produce the following structure:

| | Control | Example |
|---|---|---|
| Inside bubble layer/thickness | Stamylan 3020H / 6 µm | Stamylan 3020H / 14 µm |
| Tie layer/thickness | Surlyn AD8455 / 44 µm | Nucrel 0407 / 34 µm |
| Outside bubble layer/thickness | Stamylan 3020H / 6µm | Stamylan 3020H / 12 µm |
| Masterbatch added to tie layer | 0% | 1% |
| Production | Stable | stable |
| Observations | no bubbles | bubbles |
| Tear | transverse direction | transverse and machine directions |

The above example shows that it is possible to obtain an aesthetically looking bubble effect suggesting 'freshness' in a film while at the same time this film will have low tear strength in transverse direction and will therefore be suitable for easy opening beverage bundle packaging applications.

## Claims

1. A molded article having a smooth exterior and an interior containing uniformly dispersed bubbles made from a first thermoplastic composition comprising a copolymer of ethylene and an α,β-unsaturated C₃-C₈ carboxylic acid and a compound which reacts with the acid group of the copolymer to liberate gas and a second thermoplastic composition not containing a compound which reacts to liberate gas co-injected over the first thermoplastic composition.

2. The molded article according to claim 1 wherein the copolymer of the first thermoplastic composition is neutralized from 10-99.5% with a metal ion selected from groups Ia, Ib, IIa, IIIa, IVa, VIb, and VIII of the Periodic Table of Elements.

3. The molded article according to claim 1 or 2 wherein the copolymer of the first thermoplastic composition is a metal carbonate with the metal ion chosen from the groups Ia, Ib, IIa of the periodic Table of Elements.

4. The molded article according to claim 1, 2, or 3 wherein the copolymer of the first thermoplastic composition further comprises an acrylate.

5. A multi-layer film made by co-extruding a first thermoplastic composition comprising a copolymer of ethylene and an α,β-unsaturated C₃-C₈ carboxylic acid and a compound which reacts with the acid group of the copolymer during the processing of the composition into the film to liberate gas to yield an attractive dispersion of bubbles in the film layer with a second thermoplastic composition not containing a compound which reacts to liberate gas during processing of the composition into the film.

6. The film according to claim 5 wherein the copolymer of the first thermoplastic composition is neutralized from 10-99.5% with a metal ion selected from groups Ia, Ib, IIa, IIIa, IVa, VIb, and VIII of the Periodic Table of Elements.

7. The film according to claims 5 or 6 wherein the compound of the first thermoplactic composition is a metal carbonate with the metal ion chosen from the groups Ia, Ib, IIa of the periodic Table of Elements.

8. The film according to any one of claims 5, 6, or 7 wherein the copolymer of the first thermoplastic composition further comprises an acrylate.

9. The film according to any one of claims 5, 6, 7, or 8 wherein the second thermoplastic composition is selected to have low tear strength in the transverse direction

## Patentansprüche

1. Pressformartikel mit glatter Außenseite und einer Innenseite, die ungleichförmig verteilte Bläschen enthält, die hergestellt sind aus einer ersten thermoplastischen Zusammensetzung, aufweisend ein Copolymer von Ethylen und eine α,β-ungesättigte C₃-C₈-Carbonsäure und eine Verbindung, die mit der Säuregruppe des Copolymers unter Freisetzung von Gas reagiert, und eine zweite thermoplastische Zusammensetzung, die keine Verbindung enthält, die über der ersten thermoplastischen Zusammensetzung coinjiziert unter Freisetzung von Gas reagiert.

2. Pressformartikel nach Anspruch 1, bei welchem das Copolymer der ersten thermoplastischen Zusammensetzung neutralisiert ist mit 10 - 99,5% eines Metall-Ions, ausgewählt aus den Gruppen Ia, Ib, IIa, IIIa, IVa, VIb und VIII des Periodensystems der Elemente.

3. Pressformartikel nach Anspruch 1 oder 2, bei welchem das Copolymer der ersten thermoplastischen Zusammensetzung ein Metallcarbonat ist, wobei das Metall-Ion ausgewählt ist aus den Elementen der Gruppen Ia, Ib, IIa des Periodensystems der Elemente.

4. Pressformartikel nach Anspruch 1, 2 oder 3, bei welchem das Copolymer der ersten thermoplastischen Zusammensetzung ferner ein Acrylat aufweist.

5. Mehrschichtfolie, hergestellt durch Coextrudieren einer ersten thermoplastischen Zusammensetzung, aufweisend ein Copolymer von Ethylen und eine α,β-ungesättigte C₃-C₈-Carbonsäure und eine Verbindung, die mit der Säuregruppe des Copolymers während des Verarbeitens der Zusammensetzung zu einer Folie unter Freisetzung von Gas reagiert, um eine attraktive Verteilung von Bläschen in der Folienschicht mit einer zweiten thermoplastischen Zusammensetzung zu liefern, die keine Verbindung enthält, die während des Verarbeitens der Zusammensetzung zu einer Folie unter Freisetzung von Gas reagiert.

6. Folie nach Anspruch 5, bei welcher das Copolymer der ersten thermoplastischen Zusammensetzung neutralisiert ist mit 10 - 99,5% eines Metall-Ion, ausgewählt aus der Gruppe, bestehend aus den Gruppen Ia, Ib, IIa, IIIa, IVa, VIb und VIII des Periodensystems der Elemente.

7. Folie nach Anspruch 5 oder 6, bei welcher die Verbindung der ersten thermoplastischen Zusammensetzung ein Metallcarbonat ist, wobei das Metall-Ion ausgewählt ist aus den Elementen der Gruppen Ia, Ib, IIa des Periodensystems der Elemente.

8. Folie nach einem der vorgenannten Ansprüche 5, 6 oder 7, bei welcher das Copolymer der ersten thermoplastischen Zusammensetzung ferner ein Acrylat aufweist.

9. Folie nach einem der vorgenannten Ansprüche 5, 6, 7 oder 8, bei welcher die zweite thermoplastische Zusammensetzung so ausgewählt ist, dass sie in der Querrichtung über eine geringe Reißfestigkeit verfügt.

## Revendications

1. Article moulé ayant un extérieur lisse et un intérieur contenant des bulles dispersées uniformément constitué d'une première composition thermoplastique comprenant un copolymère d'éthylène et d'un acide carboxylique en C₃-C₈ α,β-insaturé et un composé qui réagit avec le groupement acide du copolymère pour libérer du gaz et une seconde composition thermoplastique ne contenant pas un composé qui réagit pour libérer du gaz injecté simultanément sur la première composition thermoplastique.

2. Article moulé selon la revendication 1 dans lequel le copolymère de la première composition thermoplastique est neutralisé à 10-99,5% avec un ion d'un métal choisi parmi les groupes Ia, Ib, IIa, IIIa, IVa, VIb et VIII du Tableau Périodique des Eléments.

3. Article moulé selon la revendication 1 ou 2, dans lequel le copolymère de la première composition thermoplastique est un carbonate métallique avec l'ion d'un métal choisi parmi les groupes Ia, Ib, IIa du Tableau Périodique des Eléments.

4. Article moulé selon la revendication 1, 2 ou 3 dans lequel le copolymère de la première composition thermoplastique comprend en outre un acrylate.

5. Film multicouches obtenu en co-extrudant une première composition thermoplastique comprenant un copolymère d'éthylène et d'un acide carboxylique en C₃-C₈ α,β-insaturé et un composé qui réagit avec le groupement acide du copolymère durant la transformation de la composition en film pour libérer du gaz pour donner une dispersion attractive de bulles dans la couche du film avec une seconde composition thermoplastique ne contenant pas un composé qui réagit pour libérer du gaz durant la transformation de la composition en film.

6. Film selon la revendication 5 dans lequel le copolymère de la première composition thermoplastique est neutralisé à 10-99,5% avec un ion d'un métal choisi parmi les groupes Ia, Ib, IIa, IIIa, IVa, VIb et VIII du Tableau Périodique des Eléments.

7. Film selon la revendication 5 ou 6 dans lequel le composé de la première composition thermoplastique est un carbonate métallique avec un ion d'un métal choisi parmi les groupes Ia, Ib, IIa du Tableau Périodique des Eléments.

8. Film selon l'une quelconque des revendications 5, 6 ou 7 dans lequel le copolymère de la première composition thermoplastique comprend en outre un acrylate.

9. Film selon l'une quelconque des revendications 5, 6, 7 ou 8 dans lequel la seconde composition thermoplastique est choisie pour avoir une faible résistance à la déchirure dans le sens transversal.
